(19) Europäisches Patentamt

European Patent Office

Office européen des brevets

(11) **EP 1 009 006 B1**

(12) **FASCICULE DE BREVET EUROPEEN**

(45) Date de publication et mention
de la délivrance du brevet:
**07.01.2004   Bulletin 2004/02**

(51) Int Cl.⁷: **H01H 47/04**, H02H 3/24

(21) Numéro de dépôt: **99410162.4**

(22) Date de dépôt: **16.11.1999**

(54) **Dispositif de commande standard d'un electro-aimant d'ouverture ou de fermeture d'un disjoncteur**

Standardeinrichtung zur Steuerung eines Elektromagneten zum Öffnen oder Schliessen eines Schutzschalters

Standard control device for an electromagnet for opening or closing a circuit breaker

(84) Etats contractants désignés:
**DE ES GB IT**

(30) Priorité: **07.12.1998  FR 9815552**

(43) Date de publication de la demande:
**14.06.2000   Bulletin 2000/24**

(73) Titulaire: **Schneider Electric Industries SAS
92500 Rueil-Malmaison (FR)**

(72) Inventeurs:
• **Chelloug, Mustapha
38050 Grenoble cedex 09 (FR)**
• **Durif, Ghislain
38050 Grenoble cedex 09 (FR)**
• **Nereau, Jean-Pierre
38050 Grenoble cedex 09 (FR)**

(74) Mandataire: **Jouvray, Marie-Andrée et al
Schneider Electric SA,
Sce. Propriété Industrielle
38050 Grenoble Cédex 09 (FR)**

(56) Documents cités:
**US-A- 5 671 115**

## Description

L'invention concerne un dispositif de commande et un électro-aimant d'ouverture ou de fermeture d'un disjoncteur, l'ensemble comportant au moins une bobine connectée en série avec un interrupteur électronique aux bornes d'une tension d'alimentation, des moyens de mesure d'une première tension, représentative de la tension d'alimentation, et des moyens de commande de l'électro-aimant, comportant des moyens de comparaison, connectés aux moyens de mesure de la première tension et à une électrode de commande de l'interrupteur électronique, pour comparer la première tension à des seuils d'appel et de retombée.

Le document US 5 671 115 montre un ensemble selon le préambule de la revendication 1.

Les disjoncteurs comportent généralement un certain nombre d'auxiliaires électriques, plus particulièrement des électro-aimants de fermeture (XF) ou d'ouverture, notamment des déclencheurs à émission de courant (MX) ou à minimum de tension (MN). Les électro-aimants utilisés dans les déclencheurs à minimum de tension (MN) ont des caractéristiques de fonctionnement différents de ceux utilisés dans les déclencheurs à émission de courant (MX) ou dans les électro-aimants de fermeture (XF). Les dispositifs de commande qui leur sont associés sont, en conséquence, différents.

L'invention a pour but un dispositif de commande standard pouvant être utilisé indifféremment avec les trois types d'auxiliaires précités et garantissant dans tous les cas une sécurité de fonctionnement satisfaisante.

Selon l'invention ce but est atteint par le fait que les moyens de comparaison comparent la première tension à des premier et second seuils d'appel distincts et à un seuil de retombée, de manière à contrôler le passage d'un courant d'appel dans la bobine pendant une phase d'appel de durée prédéterminée lorsque la première tension atteint l'un des seuils d'appels.

Selon un développement de l'invention, à la fin d'une phase d'appel les moyens de commande contrôlent, pendant une phase de maintien, le passage dans la bobine d'un courant de maintien plus faible que le courant d'appel, le dispositif comportant des moyens de mesure du courant circulant dans la bobine, les moyens de commande comportant des moyens de régulation du courant de maintien, avec des moyens de comparaison du courant à une valeur de consigne prédéterminée, et des moyens de commande du passage à une nouvelle phase d'appel lorsque, pendant une phase de maintien, le courant est inférieur ou égal à une fraction prédéterminée de la valeur de consigne pendant une seconde durée prédéterminée.

Selon un autre développement de l'invention, les moyens de mesure de la première tension comportent des moyens numériques de détermination de tension efficace, comportant des moyens d'échantillonnage et un filtre à réponse impulsionnelle finie ayant une équation de la forme :

$$U2 = a_1\, A1 + a_2\, A2 + \cdots + a_j\, Aj + \cdots + a_n\, An$$

avec

$$Aj = \sum_{0}^{m-l} U2_i^{\,2}$$

où $U2_i$ est un échantillon de la première tension, $n \geq 2$, $m \geq 1$, les coefficients de pondération $a_j$ n'étant pas tous identiques.

D'autres avantages et caractéristiques ressortiront plus clairement de la description qui va suivre de modes particuliers de réalisation de l'invention, donnés à titre d'exemples non limitatifs et représentés aux dessins annexés sur lesquels :

Les figures 1 et 2 représentent de manière schématique, en coupe, des modes de réalisation particuliers, de type connu, d'électro-aimants utilisés pour un déclencheur à minimum de tension (MN) et, respectivement, dans un déclencheur à émission de courant (MX) ou pour un électro-aimant de fermeture d'un disjoncteur.

La figure 3 illustre un dispositif de commande dans lequel l'invention peut être mise en oeuvre.

La figure 4 illustre les éléments additionnels d'un dispositif selon la figure 3 dans le cas d'un électro-aimant à double bobinage.

La figure 5 représente un mode de réalisation particulier d'un organigramme de fonctionnement d'un dispositif selon l'invention.

La figure 6 illustre un mode de réalisation particulier d'un sous-programme correspondant à une phase de maintien de l'organigramme selon la figure 5.

Les figures 7a et 7b illustrent respectivement les variations, en fonction du temps, des signaux U2 et Ib dans un dispositif selon la figure 3, lorsque la tension U2 monte lentement.

Les figures 8a et 8b illustrent respectivement la variation, en fonction du temps, des signaux U2 et Ib dans un dispositif selon la figure 3 en cas de microcoupure et en cas de chute de la tension d'alimentation.

La figure 9 représente un mode particulier de réalisation d'un sous-programme de mesure de la tension U2.

Un électro-aimant comporte classiquement un noyau mobile, dont le déplacement vers une position dans laquelle l'électro-aimant est actionné est provoqué par la circulation d'un courant d'appel. Il est ensuite maintenu dans cette position par le passage d'un courant de maintien, plus faible.

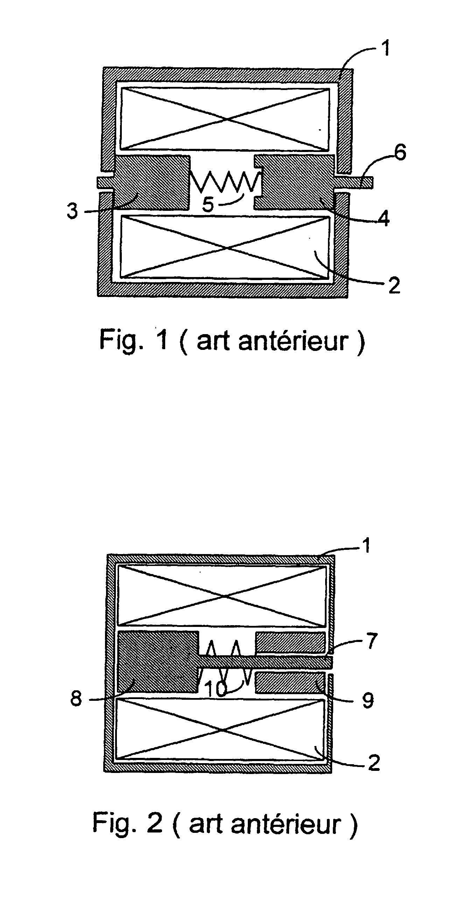

Un électro-aimant du type représenté à la figure 1 est, classiquement, utilisé dans les déclencheurs à minimum de tension (MN). Il comporte une armature 1 à l'intérieur de laquelle est disposée une bobine 2. La bobine 2 entoure un noyau fixe 3, solidaire de l'armature 1, et un noyau mobile 4. Un ressort 5 est disposé entre les noyaux fixe et mobile de manière à écarter le noyau mobile 4 du noyau fixe 3. Dans la position de repos de l'électro-aimant, représentée à la figure 1, un plongeur 6, solidaire du noyau mobile 4, fait saillie à l'extérieur de l'armature. L'application d'une tension d'alimentation aux bornes de la bobine 1 provoque l'excitation de l'électro-aimant. Le passage d'un courant d'appel dans la bobine 1 provoque le déplacement du noyau mobile 4 en direction du noyau fixe 3, à l'encontre du ressort 5. Lorsque les noyaux sont collés, le plongeur 6 ne fait plus saillie hors de l'armature 1. La phase d'appel dure suffisamment longtemps pour permettre un déplacement complet du noyau mobile 4 et son collage contre le noyau fixe 3. Par la suite, le passage d'un courant d'appel élevé n'est plus nécessaire pour assurer le maintien du noyau mobile en position d'actionnement de l'électro-aimant et, classiquement, seul un courant de maintien, plus faible, est maintenu dans la bobine 1. Lorsque la tension d'alimentation est insuffisante, le passage du courant dans la bobine 1 est interrompu. L'énergie du ressort 5 repousse alors le noyau mobile 4 dans la position représentée à la figure 1 et le plongeur 6, solidaire du noyau mobile, provoque l'ouverture du disjoncteur associé dans le cas d'un déclencheur à minimum de tension. L'ouverture du disjoncteur étant assurée par l'action du ressort 5, celui-ci doit être relativement puissant. En conséquence, l'énergie nécessaire pour coller les noyaux lors de l'excitation de l'électro-aimant, permettant ainsi la fermeture du disjoncteur, est relativement importante. La tension d'alimentation de l'électro-aimant doit, en conséquence, être suffisante pour assurer dans tous les cas le collage des noyaux lors de la commande de l'électro-aimant. Classiquement, pour une bobine de déclencheur à minimum de tension ayant une tension nominale Un de 100V, on utilise un seuil d'appel de l'ordre de 70V et un seuil de retombée de l'ordre de 30V.

Un électro-aimant du type représenté à la figure 2 est, classiquement, utilisé dans les déclencheurs à émission de courant (MX) ainsi que comme électro-aimant de fermeture (XF) d'un disjoncteur. Il comporte également une bobine 2 dans une armature 1. Un plongeur 7 solidaire d'un noyau mobile 8 traverse un noyau fixe 9, solidaire de l'armature 1. En position de repos de l'électro-aimant, représentée sur la figure 2, un ressort 10 maintient les noyaux écartés, le plongeur ne faisant alors pas saillie à l'extérieur de l'armature. En cas d'actionnement de l'électro-aimant un courant d'appel circulant dans la bobine 2 provoque le déplacement du noyau mobile, et en conséquence, du plongeur 7 qui fait alors saillie vers l'extérieur, permettant ainsi soit l'ouverture du disjoncteur associé dans le cas d'un déclencheur à émission de courant (MX), soit sa fermeture dans le cas d'un électro-aimant de fermeture (XF). C'est donc l'énergie électromagnétique fournie par la bobine qui provoque l'actionnement du disjoncteur. Comme précédemment, une phase d'appel est suivie d'une phase de maintien, pendant laquelle le courant circulant dans la bobine est plus faible. Lorsque la tension est inférieure à un seuil de retombée, le passage du courant dans la bobine est interrompu et le noyau mobile 8 est écarté du noyau fixe 9 sous l'action du ressort 10. Le passage dans cette position n'ayant pas d'action sur le disjoncteur, le ressort 10 n'a pas à être puissant. C'est donc un ressort relativement faible par comparaison avec le ressort 5. La tension d'alimentation nécessaire pour l'actionnement de l'électro-aimant est, en conséquence, inférieure à celle nécessaire dans le cas d'un électro-aimant selon la figure 1. Classiquement, pour une bobine d'un déclencheur à émission de courant ayant une tension d'alimentation nominale Un de 100V, on utilise un seuil d'appel de l'ordre de 20V et un seuil de retombée de l'ordre de 10V.

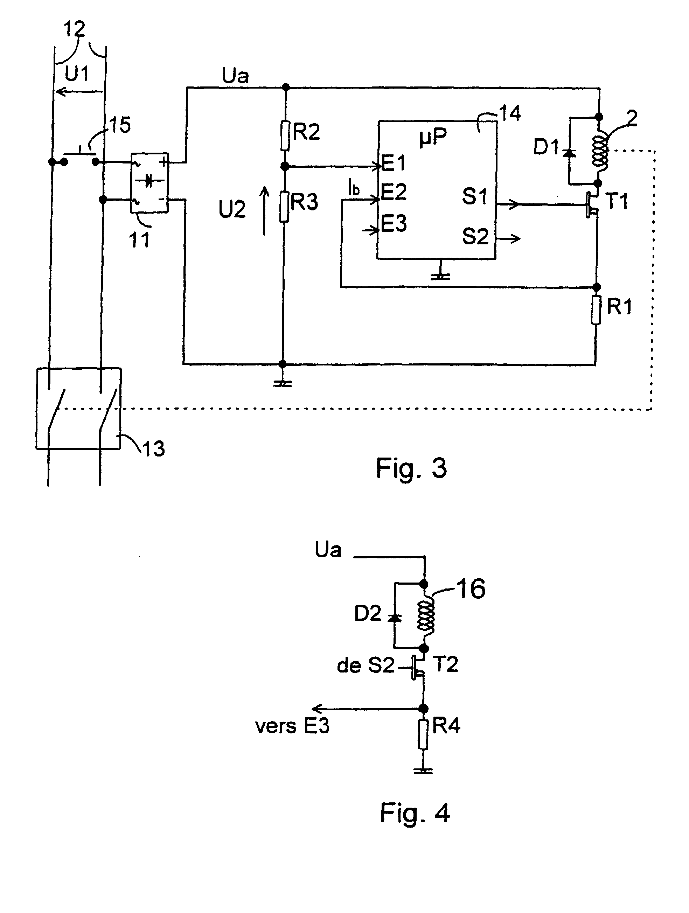

Le dispositif de commande illustré à la figure 3 peut être utilisé aussi bien pour la commande d'un électro-aimant selon la figure 1 pour un déclencheur à minimum de tension que pour la commande d'un électro-aimant selon la figure 2 pour un déclencheur à émission de courant ou un électro-aimant de fermeture d'un disjoncteur.

La bobine 2 est connectée en série avec un interrupteur électronique, constitué de préférence par un transistor T1, et une résistance de mesure R1 aux bornes d'une tension d'alimentation Ua. Classiquement, une diode de roue libre D1 est connectée en parallèle sur la bobine 2. La tension d'alimentation Ua est obtenue par redressement, au moyen d'un redresseur à pont de diodes 11, d'une tension alternative U1 fournie par les conducteurs d'un réseau 12 auxquels est connecté un disjoncteur 13 dont l'ouverture ou, le cas échéant, la fermeture peut être commandée par la bobine 2. Une sortie S1 d'un circuit 14 de commande, de préférence à microprocesseur, est connectée à une électrode de commande du transistor T1 à laquelle elle fournit des signaux de commande. Une entrée E1 du circuit de commande 14 est connectée au point milieu d'un diviseur résistif constitué par deux résistances R2 et R3, connectées en série aux bornes de la tension d'alimentation Ua. Les signaux appliqués sur l'entrée E1 sont représentatifs de la tension U2 aux bornes de la résistance R3, elle-même représentative de la tension d'alimentation Ua de l'électro-aimant, qui est elle-même représentative de la tension U1 du réseau 12. Le circuit de commande 14 est également connecté aux bornes de la résistance R1, de manière à recevoir sur une entrée E2 des signaux Ib représentatifs du courant circulant dans la bobine lorsque le transistor T1 est conducteur. Dans le cas d'un déclencheur à émission de courant (MX) ou d'un électro-aimant de fermeture (XF) d'un disjoncteur, un organe de commande permet de fournir à l'électro-aimant un ordre de commande. L'électro-aimant est actionné à réception de cet ordre à condition que la tension d'alimentation Ua soit suffisante. Sur la figure 3, l'organe de commande est constitué par un bouton-poussoir 15 disposé entre l'un des conducteurs du réseau et l'une des bornes d'entrée du redresseur 11. L'organe de commande peut éventuellement appliquer un ordre de commande directement sur une entrée de commande, non représentée, du circuit de commande à microprocesseur 14. Dans ce cas, comme dans le cas d'un déclencheur à minimum de tension (MN), le redresseur 11 est connecté en permanence au réseau 12.

La figure 4 illustre les éléments complémentaires d'un mode de réalisation à double bobinage. Une bobine d'appel 16 est connectée en série avec un transistor T2 et une résistance de mesure R4 aux bornes de la tension d'alimentation Ua. Une diode de roue libre D2 est connectée en parallèle sur la bobine d'appel 16. L'électrode de commande du transistor T2 est connectée à une sortie S2 du circuit de commande 14. Si le courant dans la bobine d'appel 16 doit être régulé pendant la phase d'appel, le point commun à R4 et T2 est connecté à une entrée E3 du circuit 14.

Le circuit de commande 14 peut être réalisé par tout moyen approprié, analogique ou numérique. Dans un mode de réalisation préférentiel, il comporte un microprocesseur qui réalise, avec une période d'échantillonnage Te, l'échantillonnage des signaux appliqués sur ses entrées E1, E2 et E3, leur conversion analogique/numérique, leur comparaison à des valeurs de consigne pendant les phases de maintien et d'appel, et la commande des transistors T1 et T2.

Le circuit de commande 14 d'un dispositif selon l'invention utilise deux seuils d'appel distincts et un seuil de retombée. Il peut ainsi être utilisé indifféremment avec les différents types d'électro-aimants. Les seuils d'appel et de retombée retenus sont compatibles à la fois avec les électro-aimants existants et avec les normes des auxiliaires de disjoncteurs considérés.

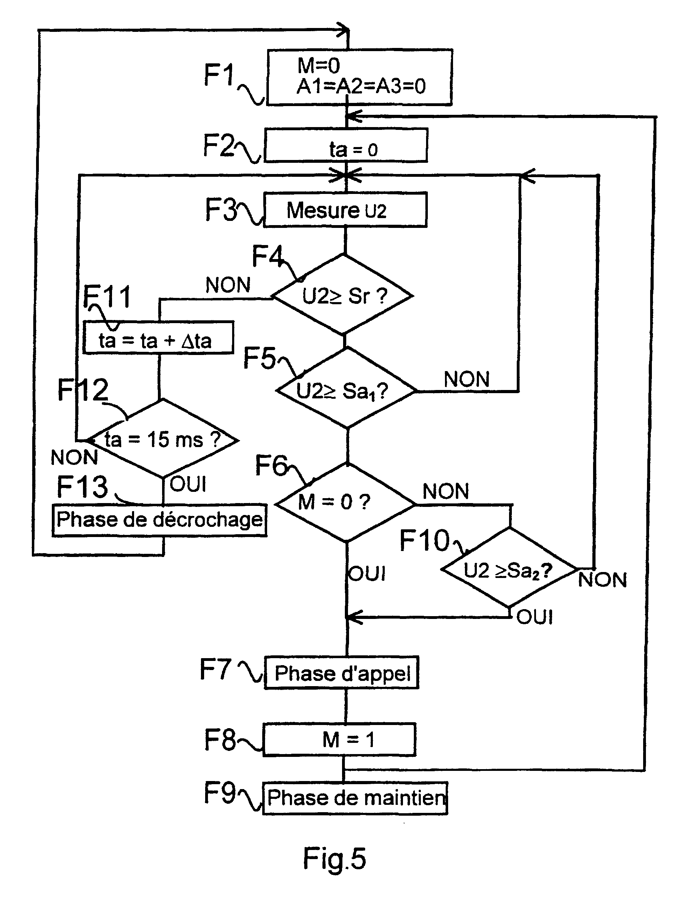

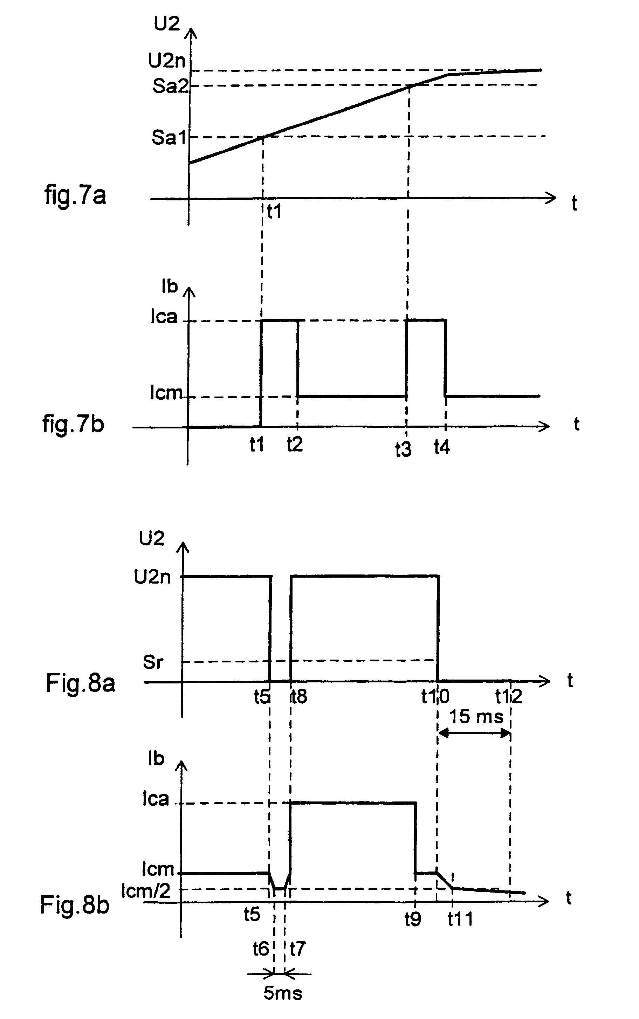

Un mode de réalisation particulier d'un organigramme de fonctionnement d'un dispositif selon l'invention à microprocesseur, représenté à la figure 5, va être explicité plus en détail ci-dessous, en référence aux formes d'onde des signaux U2 et Ib, représentés aux figures 7a et 7b sur lesquelles la tension U2 monte lentement jusqu'à une valeur nominale U2n.

Dans une étape d'initialisation F1, un indicateur M est mis dans un premier état logique, 0 sur la figure 5. Puis dans une étape F2 un indicateur de durée ta est mis à 0. Ensuite le microprocesseur du circuit de commande 14 passe à une étape F3 de mesure (échantillonnage et conversion) de la tension U2 appliquée à l'entrée E1.

Le microprocesseur passe alors à une étape F4 de comparaison de la tension U2 au seuil de retombée Sr. Si la tension U2 est supérieure ou égale au seuil Sr (sortie OUI de F4), alors, dans une étape F5, la tension U2 est comparée à un premier seuil d'appel $Sa_1$. Si la tension U2 est inférieure au seuil $Sa_1$ (sortie NON de F5), le microprocesseur repasse à l'entrée de l'étape F3 de mesure de U2 pour la surveillance d'un nouvel échantillon de tension. Ceci correspond, sur la figure 7a aux instants antérieurs à l'instant t1. Par contre si, en F5, la tension U2 est supérieure ou égale au seuil $Sa_1$ (sortie OUI de F5), le microprocesseur passe à une étape F6 dans laquelle il vérifie si l'indicateur M est toujours à zéro. Si c'est le cas (sortie OUI de F6), le microprocesseur passe à une étape F7 correspondant à une phase d'appel. Le transistor T1, ou T2 dans le mode de réalisation à double bobinage de la figure 4, est alors contrôlé par le circuit de commande 14 pour qu'un courant Ib dont la valeur est égale à une valeur de consigne Ica circule dans la bobine 2, ou dans la bobine d'appel 16 dans le cas d'un double bobinage, pendant la phase d'appel. Sur la figure 7b cette phase se termine à un instant t2. La durée de la phase d'appel est prédéterminée, par exemple 80 ms, de manière à assurer dans tous les cas un collage correct des noyaux fixe et mobile de l'électro-aimant. A la fin de la phase d'appel, dans une étape F8 l'indicateur M est mis à l'état logique 1, puis le microprocesseur passe à une étape F9 correspondant à une phase de maintien. Pendant la phase de maintien, le transistor T1 est contrôlé pour que la bobine 6 soit parcourue par un courant Ib dont la valeur est égale à une valeur de consigne Icm (figure 7b), inférieure à Ica, suffisante pour maintenir collés les noyaux de l'électro-aimant.

Pendant la phase de maintien le microprocesseur continue sa surveillance de la tension U2 en repassant, en parallèle avec le passage à l'étape F9, à l'entrée de l'étape F2.

Si, à l'étape F6, l'indicateur M n'est pas nul (sortie NON de F6) cela signifie que l'électro-aimant est dans une phase de maintien. Le microprocesseur vérifie alors, dans une étape F 10, si la tension U2 est égale ou supérieure à un second seuil d'appel $Sa_2$. Si ce n'est pas le cas (sortie NON de F F10), cela signifie donc que la tension U2 est comprise entre les seuils $Sa_1$ et $Sa_2$ et que la bobine est parcourue par le courant de maintien. Cet état correspond à l'état représenté entre les instants t2 et t3 sur les figures 7a et 7b. Le microprocesseur repasse alors à l'entrée de l'étape F3, continuant la surveillance de U2. Par contre, si à l'étape F10, U2 est supérieur ou égale à $Sa_2$ (sortie OUI de F10), alors le microprocesseur passe à l'étape F7 provoquant une nouvelle phase d'appel entre les instants t3 et t4, puis une phase de maintien après l'instant t4.

Si à l'étape F4, la tension U2 est inférieure au seuil de retombée Sr (sortie NON de F4), l'indicateur ta est incrémenté (ta = ta +Δta) dans une étape F11. Puis, dans une étape F12, ta est comparé à une durée prédéterminée, 15 ms sur la figure 5. Si l'indicateur de durée ta n'est pas égal à 15 ms (sortie NON de F12), le microprocesseur repasse à l'entrée de l'étape F3. Par contre, si ta est égal à 15 ms (sortie OUI de F 12), cela signifie que la tension U2 est inférieure au seuil de retombée depuis 15 ms. Le microprocesseur provoque alors (étape F13) le passage à une phase de décrochage, pendant laquelle le courant circulant dans la bobine, ou dans les bobines dans le cas d'un double bobinage, est annulé. Le seuil de retombée Sr et la durée ta maximum sont choisis de manière à ce que le circuit électronique de commande donne un ordre de décrochage avant que l'électro-aimant ne tombe de lui-même.

Dans un mode de réalisation préférentiel, le premier seuil d'appel, $Sa_1$, est représentatif d'une tension comprise entre 40 et 50%, de préférence 45%, de la tension nominale d'alimentation de l'électro-aimant et le second seuil d'appel, $Sa_2$, est représentatif d'une tension comprise entre 70 et 85%, de préférence 80%, de la tension nominale d'alimentation de l'électro-aimant. Le seuil de retombée Sr correspond quant à lui à une tension d'environ 30% de la tension nominale d'alimentation.

Dans le cas d'une montée lente de la tension d'alimentation, telle que représentée à la figure 7a, lorsque la tension U2 atteint, à l'instant t1, le premier seuil $Sa_1$, le passage en phase d'appel (t1-t2) provoque automatiquement le collage d'un électro-aimant à ressort faible, c'est à dire du type utilisé pour un déclencheur à émission de courant (MX) ou pour un électro-aimant de fermeture (XF). Par contre si l'électro-aimant, à ressort puissant, est du type utilisé pour un déclencheur à minimum de tension (MN), cette phase d'appel est insuffisante. Lorsque la tension U2 atteint le second seuil $Sa_2$, à l'instant t3, le circuit de commande provoque un nouveau passage en phase d'appel (t3-t4). Cette nouvelle phase d'appel n'a pas d'influence si les noyaux de l'électro-aimant ont déjà été collés durant la première phase d'appel. Par contre si cela n'était pas le cas, alors le collage est assuré pendant cette seconde phase d'appel. Dans le cas d'une montée rapide de la tension d'alimentation la première phase d'appel peut éventuellement être suffisante dans tous les cas.

Pour augmenter la fiabilité du dispositif de commande, celui-ci comporte, de préférence, également des moyens de détection de microcoupures de la tension d'alimentation Ua. Une telle microcoupure, ou interruption fugitive de tension, peut en effet faire retomber l'électro-aimant lorsque celui-ci est en phase de maintien. Comme décrit ci-dessus, une phase de décrochage n'est introduite par le microprocesseur que si la tension U2 reste inférieure au seuil de retombée Sr pendant au moins 15 ms. Une coupure plus courte, par exemple 10-11 ms, ne doit pas conduire au passage en phase de décrochage. Cependant, pour éviter un éventuel décrochage intempestif de l'électro-aimant le circuit de commande 14 qui détecte une telle microcoupure passe à une nouvelle phase d'appel.

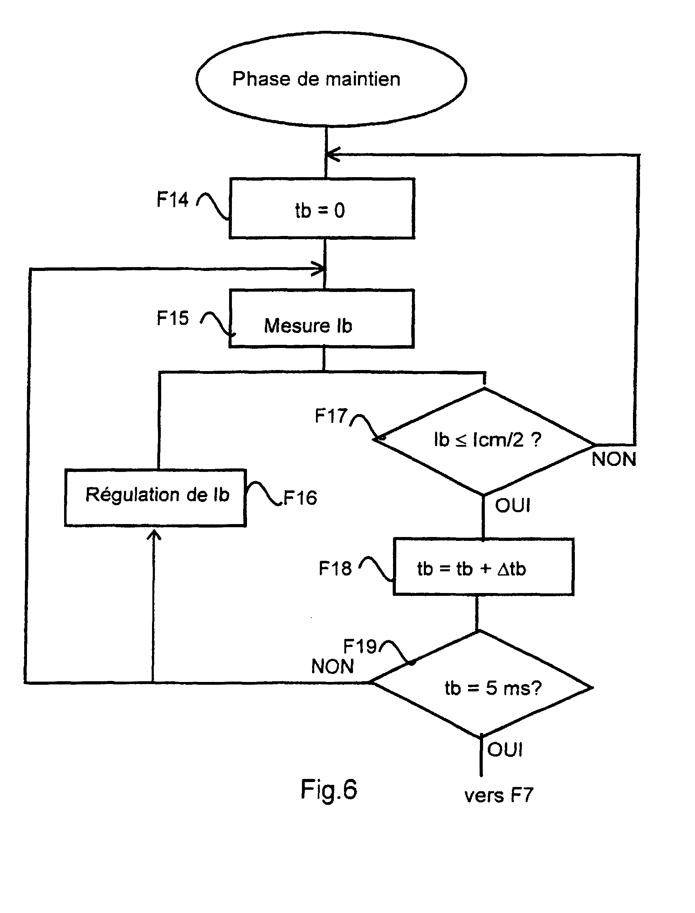

Dans le mode de réalisation particulier illustré aux figures 6, 8a et 8b, la détection d'une microcoupure pendant une phase de maintien est basée sur la surveillance du courant de maintien Ib dans la bobine 2. Lorsque le courant Ib est inférieur à une fonction prédéterminée, comprise de préférence entre ¼ et ½ , de la valeur de consigne Icm pendant une période prédéterminée, de préférence voisine de quelques millisecondes, une nouvelle phase d'appel est provoquée

Dans le sous-programme de la figure 6, une phase de maintien commence par une étape d'initialisation F14, pendant laquelle un indicateur de durée tb est mis à zéro. Puis, dans une étape F15, le courant Ib est mesuré. Pour cela le transistor T1 est rendu temporairement conducteur, permettant l'échantillonnage et la conversion analogique/numérique des signaux appliqués à l'entrée E2 du circuit de commande 14. Ensuite, le microprocesseur réalise parallèlement la détection des microcoupures et la régulation du courant Ib à la valeur de consigne Icm, dans une étape F16 qui se reboucle sur l'entrée de l'étape F15. Pour détecter les microcoupures, le microprocesseur compare le courant Ib à un seuil égal à Icm/2 (ou Icm/4) dans une étape F17. Si (sortie NON de F17), le courant Ib est supérieur à ce seuil (avant l'instant t5 sur la figure 8b), alors le microprocesseur repasse à l'entrée de l'étape F14. Par contre, si (entre t6 et t7) le courant Ib est inférieur ou égal à ce seuil, alors, le microprocesseur passe (sortie OUI de F17) à une étape F18 pendant laquelle l'indicateur de durée tb est incrémenté (tb = tb + $\Delta$tb). Puis dans une étape F19, l'indicateur de durée tb est comparé à 5 ms . Si tb est inférieur à 5ms (sortie NON de F19) alors le microprocesseur se reboucle sur l'entrée de l'étape F15 pour une nouvelle mesure de Ib. Par contre si tb = 5 ms (sortie OUI de F19) cela signifie que le courant Ib est inférieur au seuil Icm/2 depuis 5 ms et le microprocesseur provoque une nouvelle phase d'appel (étape 7), à l'instant t7. S'il s'agissait bien d'une microcoupure, la tension U2 est déjà revenue à sa tension nominale ou y revient au début de la phase d'appel, à un'instant t8, et le courant peut prendre la valeur Ica pendant la durée de la phase d'appel, avant un nouveau passage en phase de maintien à un instant t9. Par contre, si, comme représenté à la figure 8a, la chute de tension commencée en un instant t10 dure plus de 15ms, cette chute de tension provoque d'abord une chute du courant, qui est détectée 5 ms plus tard, en t11, comme une microcoupure provoquant un passage en phase d'appel. Cependant, la tension ne se rétablissant pas, le courant Ib continue à baisser et le maintien de la tension U2 en dessous du seuil de retombée Sr pendant au moins 15 ms (figure 8a) conduit le microprocesseur à provoquer à l'instant t12 une phase de décrochage (étape F13 de la figure 5) pendant laquelle le courant dans la bobine est annulé.

La mesure de la tension U2 par le circuit de commande 14 doit avoir une précision satisfaisante que la tension d'alimentation Ua, dont elle est dérivée, soit une tension continue ou une tension alternative redressée double alternance comme dans le mode de réalisation de la figure 3. Par ailleurs, dans le cas d'une tension alternative redressée, la fréquence de la tension alternative doit pouvoir varier dans des plages de fréquence comprises entre 45 et 65 Hz et 360 et 440 Hz. Dans le cas d'un disjoncteur, la tension peut être perturbée par des harmoniques et la mesure doit être rapide car avec les électro-aimants d'ouverture le disjoncteur doit ouvrir en moins de 40 millisecondes. De plus, la plage de température de fonctionnement désirée va de -40°C à + 125°C.

Dans les électro-aimants d'ouverture et de fermeture de disjoncteur connus la mesure de tension se fait généralement au moyen d'un filtre analogique passe-bas. Celui-ci fournit une valeur moyenne de la tension à mesurer avec une précision médiocre (supérieur à 10% en général) et nécessite l'utilisation d'un condensateur très précis et très stable en température, cher et volumineux.

Pour surmonter ces inconvénients, la mesure de la tension est, de préférence, réalisée par un traitement électronique numérique fournissant une valeur efficace de la tension U2 au moyen d'un filtre à réponse impulsionnelle finie (FIR). Dans un mode de réalisation préférentiel la tension U2 est échantillonnée avec une période d'échantillonnage Tc = 625 µs. De préférence, un nouveau calcul est effectué tous les 8 échantillons, soit toutes les 5 millisecondes. Pour chaque calcul le microprocesseur utilise 24 échantillons.

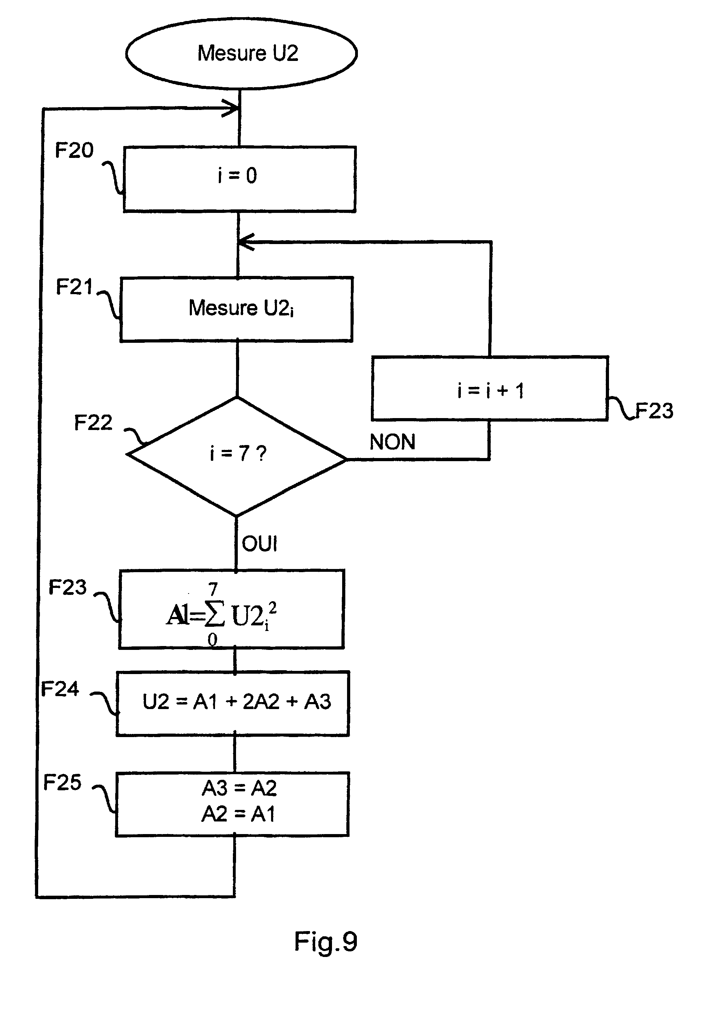

Dans le mode de réalisation particulier illustré à la figure 9, la mesure de U2 commence par une étape F20 d'initialisation, pendant laquelle un indicateur i est mis à 0. Puis le microprocesseur du circuit de commande 14 passe à une étape F21 de mesure et de mise en mémoire d'un échantillon $U2_i$. Il vérifie ensuite, dans une étape F22, si l'indicateur i a atteint la valeur 7. Si ce n'est pas le cas (sortie NON de F22)alors il passe à une étape F23 d'incrémentation de i (i = i + 1) avant de se reboucler sur l'entrée de l'étape F21 pour la mesure d'un nouvel échantillon de tension. Si à l'étape F22, i = 7, cela signifie que 8 échantillons successifs de U2 ont été mis en mémoire. Dans ce cas (sortie OUI de F22), le microprocesseur passe à une étape F23 de calcul d'une première somme partielle A1 du carré des 8 derniers échantillons mesurés

$$( A1 = \sum_0^7 U2_i^2 ).$$

Puis, dans une étape F24, le microprocesseur calcule une valeur de U2 obtenue par la somme pondérée de trois sommes partielles A1, A2 et A3 successives (U2 = A1 + 2A2 + A3). Il est à noter qu'initialement les sommes A1, A2 et A3 avaient été mises à zéro pendant l'étape F1 (figure 5). Dans une étape F25 la nouvelle somme partielle A3 prend la valeur de A2 et la nouvelle somme partielle A2 prend la valeur de A1. Le microprocesseur se reboucle ensuite sur l'entrée de l'étape F20, permettant, après la mesure de 8 nouveaux échantillons, un nouveau calcul de U2 prenant en compte les 24 derniers échantillons mesurés.

La valeur de U2 ainsi obtenue est représentative de sa valeur efficace, mesurée numériquement à l'aide d'un filtre à réponse impulsionnelle finie ayant une équation du type :

$$U2 = a_1 A1 + a_2 A2 + --- + a_j Aj + ---+a_n An$$

avec

$$Aj = \sum_0^{m-1} U2_i^2$$

dans laquelle les coefficients de pondération $a_j$ sont différents, et où $n \geq 2$ et $m \geq 1$. La valeur efficace de la tension U2 est ainsi calculée à partir de la somme pondérée de n sommes partielles de m carrés d'échantillons $U2_i$.

Dans le mode de réalisation préféré de la figure 9, n = 3, m = 8, $a_1 = a_3 = 1$ et $a_2 = 2$.

Le filtre FIR utilisé peut être d'un autre type, le nombre d'échantillons, les coefficients de pondération, la fréquence d'échantillonnage dépendant de la précision et de la rapidité désirée. A titre d'exemple, on peut également utiliser des fenêtres de Hanning, de Hamming, de forme rectangulaire.

**Revendications**

1. Dispositif de commande et électro-aimant d'ouverture ou de fermeture d'un disjoncteur, l'ensemble comportant au moins une bobine (2) connectée en série avec un interrupteur électronique (T1) aux bornes d'une tension d'alimentation (Ua), des moyens de mesure d'une première tension (U2), représentative de la tension d'alimentation, et des moyens (14) de commande de l'électro-aimant, comportant des moyens de comparaison, connectés aux moyens de mesure de la première tension et à une électrode de commande de l'interrupteur électronique (T1), pour comparer la première tension à des seuils d'appel et de retombée, **caractérisé en ce que** les moyens de comparaison comparent (F5, F10, F4) la première tension (U2) à des premier et second seuils d'appel ($Sa_1$, $Sa_2$) distincts et à un seuil de retombée (Sr), de manière à contrôler le passage d'un courant d'appel (Ica) dans la bobine pendant une phase d'appel de durée prédéterminée lorsque la première tension (U2) atteint l'un des seuils d'appels ($Sa_1$, $Sa_2$).

2. Ensemble selon la revendication 1, **caractérisé en ce que** les premier ($Sa_1$) et second ($Sa_2$) seuils d'appel sont représentatifs d'une tension de l'ordre de 40 à 50 %, respectivement de 70% à 85%, de la tension d'alimentation nominale de l'électro-aimant.

3. Ensemble selon l'une des revendications 1 et 2, **ca-**

**ractérisé en ce que** l'électro-aimant appartient à un déclencheur à minimum de tension.

4. Ensemble selon l'une des revendications 1 et 2, **caractérisé en ce que** l'électro-aimant appartient à un déclencheur à émission de courant.

5. Ensemble selon l'une quelconque des revendications 1 à 4, **caractérisé en ce que**, à la fin d'une phase d'appel les moyens (14) de commande contrôlent, pendant une phase de maintien, le passage dans la bobine (2) d'un courant de maintien plus faible que le courant d'appel, le dispositif comportant des moyens de mesure du courant (Ib) circulant dans la bobine, les moyens (14) de commande comportant des moyens de mesure de la première tension (U2) comportent des moyens de régulation du courant de maintien, avec des moyens de comparaison du courant à une valeur de consigne (Icm) prédéterminée, et des moyens de commande du passage à une nouvelle phase d'appel lorsque, pendant une phase de maintien, le courant (Ib) est inférieur ou égal à une fraction prédéterminée de la valeur de consigne pendant une seconde durée prédéterminée (tb).

6. Ensemble selon la revendication 5, **caractérisé en ce que** ladite fraction est comprise entre ¼ et ½ de la valeur de consigne (Icm).

7. Ensemble selon l'une des revendications 5 et 6, **caractérisé en ce que** la seconde durée prédéterminée (tb) est de l'ordre de quelques millisecondes.

8. Ensemble selon l'une quelconque des revendications 1 à 7, **caractérisé en ce que** les moyens numériques de détermination de tension efficace comportent des moyens d'échantillonnage et un filtre à réponse impulsionnelle finie ayant une équation de la forme :

$$U2 = a_1\,A1 + a_2\,A2 + \text{---} + a_j\,Aj + \text{---} + a_n\,An$$

avec

$$Aj = \sum_{0}^{m-1} U2_i{}^2$$

où $U2_i$ est un échantillon de la première tension, n $\geq 2$, m $\geq 1$, les coefficients de pondération $a_j$ n'étant pas tous identiques.

9. Ensemble selon la revendication 8, **caractérisé en ce que** n = 3, $a_1 = a_3 = 1$ et $a_2 = 2$.

10. Ensemble selon la revendication 2, **caractérisé en ce que** m = 8.

**Patentansprüche**

1. Anordnung mit einer Betätigungseinrichtung und einem Ausschalt- oder Einschalt-Elektromagneten eines Leistungsschalters, welche Anordnung mindestens eine in Reihe mit einem elektronischen Schalter (T1) an die Klemmen einer Versorgungsspannung (Ua) angeschlossene Spule (2), Meßmittel zur Messung einer die Versorgungsspannung abbildenden ersten Spannung (U2) sowie Steuermittel (14) zur Ansteuerung des Elektromagneten umfaßt, die mit den Meßmitteln zur Messung der ersten Spannung und einer Steuerelektrode des elektronischen Schalters (T1) verbundene Vergleichsmittel zum Vergleich der ersten Spannung mit Schalt- und Abfallschwellen umfassen, **dadurch gekennzeichnet, daß** die Vergleichsmittel die erste Spannung (U2) mit unterschiedlichen ersten und zweiten Schaltschwellen ($Sa_1$, $Sa_2$) sowie mit einer Abfallschwelle (Sr) vergleichen (F5, F10, F4), derart, daß sie den Fluß eines Schaltstroms (Ica) in der Spule während einer Schaltphase mit bestimmter Dauer steuern, wenn die erste Spannung (U2) eine der Schaltschwellen ($Sa_1$, $Sa_2$) erreicht.

2. Anordnung nach Anspruch 1, **dadurch gekennzeichnet, daß** die erste Schaltschwelle ($Sa_1$) und die zweite Schaltschwelle ($Sa_2$) repräsentativ für eine Spannung zwischen 40 und 50%, bzw. zwischen 70 und 85% der Nennversorgungsspannung des Elektromagneten sind.

3. Anordnung nach einem der Ansprüche 1 und 2, **dadurch gekennzeichnet, daß** der Elektromagnet Teil eines Unterspannungsauslösers ist.

4. Anordnung nach einem der Ansprüche 1 und 2, **dadurch gekennzeichnet, daß** der Elektromagnet Teil eines Arbeitsstromauslösers ist.

5. Anordnung nach irgendeinem der Ansprüche 1 bis 4, **dadurch gekennzeichnet, daß** die Steuermittel (14) nach Ablauf einer Schaltphase, in einer Haltephase den Fluß eines im Vergleich zum Schaltstrom kleineren Haltestroms in der Spule (2) steuern, wobei die Einrichtung Meßmittel zur Messung des in der Spule fließenden Stroms (Ib) umfaßt und die mit Meßmitteln zur Messung der ersten Spannung (U2) ausgerüsteten Steuermittel (14) Regelmittel zur Regelung des Haltestroms mit Vergleichsmitteln, die den Strom mit einem festgelegten Sollwert (1cm) vergleichen, sowie mit Steuermitteln umfassen, die eine Umschaltung in eine erneute Schaltphase veranlassen, wenn in einer Haltephase der Strom (Ib) während einer zweiten festgelegten Dauer (tb) kleiner/gleich einem bestimmten Bruchteil des Sollwerts ist.

6. Anordnung nach Anspruch 5, **dadurch gekennzeichnet, daß** der genannte Bruchteil zwischen ¼ und ½ des Sollwerts (1cm) beträgt.

7. Anordnung nach einem der Ansprüche 5 und 6, **dadurch gekennzeichnet, daß** die zweite festgelegte Dauer (tb) einige Millisekunden beträgt.

8. Anordnung nach irgendeinem der Ansprüche 1 bis 7, **dadurch gekennzeichnet, daß** die digitalen Mittel zur Bestimmung des Effektivwerts der Spannung Abtastmittel und ein Filter mit endlicher Impulsantwort umfassen, das eine Übertragungsfunktion folgenden Typs aufweist:

$$U2 = a_1\,A1 + a_2\,A2 + \text{---} + a_j\,Aj + \text{---}+a_n\,An$$

mit

$$Aj = \sum_{0}^{m-1} U2_i^{\,2}$$

wobei $U2_i$ ein Abtastwert der ersten Spannung ist, $n \geq 2$, $m \geq 1$, und die Wichtungsfaktoren $a_j$ nicht alle identisch sind.

9. Anordnung nach Anspruch 8, **dadurch gekennzeichnet, daß** $n = 3$, $a_1 = a_3 = 1$ und $a_2 = 2$.

10. Anordnung nach Anspruch 2, **dadurch gekennzeichnet, daß** $m = 8$ ist.

**Claims**

1. Control device and opening or closing electromagnet of a circuit breaker, the assembly comprising at least one coil (2) connected in series with an electronic switch (T1) to the terminals of a supply voltage (Ua), means for measuring a first voltage (U2), representative of the supply voltage, and means (14) for control of the electromagnet, comprising means for comparison, connected to the means for measuring the first voltage and to a control electrode of the electronic switch (T1), to compare the first voltage with inrush and drop-out thresholds, **characterized in that** the means for comparison compare (F5, F10, F4) the first voltage (U2) with distinct first and second inrush thresholds (Sa₁, Sa₂) and with a drop-out threshold (Sr), so as to monitor the flow of an inrush current (Ica) in the coil during an inrush phase of preset duration when the first voltage (U2) reaches one of the inrush thresholds (Sa₁, Sa₂).

2. Assembly according to claim 1, **characterized in that** the first (Sa₁) and second (Sa₂) inrush thresholds are representative of a voltage of about 40 to 50%, respectively 70 to 85%, of the rated supply voltage of the electromagnet.

3. Assembly according to one of the claims 1 and 2, **characterized in that** the electromagnet belongs to an undervoltage release.

4. Assembly according to one of the claims 1 and 2, **characterized in that** the electromagnet belongs to a shunt release.

5. Assembly according to any one of the claims 1 to 4, **characterized in that**, at the end of an inrush phase the control means (14) control, during a holding phase, the flow in the coil (2) of a holding current weaker than the inrush current, the assembly comprising means for measuring the current (Ib) flowing in the coil, the control means (14) comprising means for measuring the first voltage (U2) comprising means for regulating the holding current, with means for comparing the current with a setpoint value (Icm), and means for commanding switching to a new inrush phase when, during a holding phase, the current (Ib) is less than or equal to a preset fraction of the setpoint value during a second preset duration (tb).

6. Assembly according to claim 5, **characterized in that** said fraction is comprised between ¼ and ½ of the setpoint value (Icm).

7. Assembly according to one of the claims 5 and 6, **characterized in that** the second preset duration (tb) is about a few milliseconds.

8. Assembly according to any one of the claims 1 to 7, **characterized in that** the numerical means for determining the rms voltage comprise sampling means and a finite impulse response filter having an equation of the form:

$$U2 = a_1\,A1 + a_2\,A2 + \text{---} + a_j\,Aj + \text{---}+a_n\,An$$

with

$$Aj = \sum_{0}^{m-1} U2_i^{\,2}$$

where $U2_i$ is a sample of the first voltage, $n \geq 2$, $m \geq 1$, the weighting coefficients $a_j$ not all being identical.

9. Assembly according to claim 8, **characterized in that** $n = 3$, $a_1 = a_3 = 1$ and $a_2 = 2$.

10. Assembly according to claim 2, **characterized in that** $m = 8$.

Fig. 1 ( art antérieur )

Fig. 2 ( art antérieur )

Fig. 3

Fig. 4

Fig.5

Fig.6

fig.7a

fig.7b

Fig.8a

Fig.8b

14

Mesure U2

F20    $i = 0$

F21    Mesure $U2_i$

F22    $i = 7$ ?

NON    $i = i + 1$    F23

OUI

F23    $A1 = \sum\limits_{0}^{7} U2_i^2$

F24    $U2 = A1 + 2A2 + A3$

F25    $A3 = A2$
$A2 = A1$

Fig.9